# EUROPEAN PATENT APPLICATION

(11) **EP 4 391 124 A1**
(43) Date of publication of application: **26.06.2024**
(21) Application number: 22858585.7
(22) Date of filing: 09.06.2022
(51) Int. Cl.: H01M 8/04119, B01D 63/02

(54) **FUEL CELL MEMBRANE HUMIDIFIER**

(30) Priority: 18.08.2021 KR 20210108698
(71) Applicant: NVH Korea, Inc., Ulsan 44246 (KR)
(72) Inventor: LEE, Cheol Hee, Ansan-si Gyeonggi-do 15454 (KR); RYU, Jong Hyun, Ansan-si Gyeonggi-do 15596 (KR)
(74) Representative: Schairer, Oliver Michael
(86) International application number: PCT/KR2022/008160
(87) International publication number: WO 2023/022343

(57) **Abstract**

The disclosure in the present specification relates to a fuel cell membrane humidifier comprising: a main housing; a hollow fiber membrane cartridge comprising a seal mount formed on an end of a cartridge housing so as to protrude, and a fixing layer for potting multiple membranes on both side ends of the body thereof, the hollow fiber membrane cartridge being installed inside the main housing; an inlet housing comprising a coupling portion mounted on a inlet connecting portion of the main housing, a seal ground portion formed inside the coupling portion, and a main chamber into which dry air is supplied through a cooler; an outlet housing comprising a coupling portion connected to an outlet connecting portion of the main housing, a gas inflow port through which gas is provided from a hydrogen fuel cell stack, a second chamber in which humid air formed through the membranes flows, and a cartridge insertion portion to which one side end of the cartridge housing is coupled; a variable seal comprising a body elastically grounded to the outer peripheral surface of the seal mount, and a rib elastically deformed with respect to the body portion and forced against the seal ground portion; and a back pressure passage extending between the main chamber and the seal ground portion. The ground pressure of the rib against the seal ground portion is formed to increase in response to the pressure of dry air in the main chamber introduced through the back pressure passage when the dry air is supplied.

## Description

### Technical Field

The present disclosure relates to a fuel cell membrane humidifier and, more particularly, to a fuel cell membrane humidifier, in which when manufacturing a membrane humidifier, airtightness can be maintained between an inlet housing and a cartridge, and when supplying dry air, airtightness and sealing pressure increase to stably maintain the supply of dry air and fuel cell power generation efficiency.

### Background Art

Unless otherwise indicated in the present specification, contents described in this section do not indicate a prior art to the claims of this application, and is not admitted as a prior art although included in this section.

Generally, as for a hydrogen fuel cell that utilizes electricity generated when hydrogen fuel reacts with oxygen, there are being developed various types of fuel cells such as a polymer electrolyte fuel cell, a polymer electrolyte membrane fuel cell (PEMFC), a phosphoric acid fuel cell (PAFC), and a double exchange membrane fuel cell, etc.

In particular, a selective permeable membrane used in a membrane humidification method is preferably a hollow fiber membrane with a large permeable area per unit volume when forming a module. When manufacturing a humidifier by using a hollow fiber membrane, the hollow fiber membrane with a large contact surface area can be highly integrated, thereby enabling sufficient humidification of a fuel cell even with a small capacity, allowing low-cost materials to be used, and enabling reuse thereof through the humidifier by recovering moisture and heat contained in gas (or off-gas) discharged at a high temperature from the fuel cell.

As one of the prior arts, Korean Patent No. 10-2265021 discloses a membrane humidifier for a fuel cell having an assembly member provided between ends of a cap casing and a middle casing.

More specifically, the membrane humidifier for a fuel cell of the prior art described above includes a middle casing in which a plurality of hollow fiber membranes is accommodated; a cap casing coupled to the middle casing; a potting part formed on the end of the plurality of hollow fiber membranes and disposed to be spaced apart from the inner surface of the middle casing; an assembly member disposed between the ends of the cap casing and the middle casing to tightly couple the cap casing and the middle casing to each other; and a protruding part extending toward the edge part of the potting part inside the cap casing to tightly couple the cap casing and the potting part to each other, wherein the edge part of the potting part is contracted by a predetermined depth by the protruding part.

In the membrane humidifier for a fuel cell, a packing member is configured so that the ends of the cap casing and the middle casing are in direct contact with each other, and thus the membrane humidifier is presented as a design structure that maintains airtightness for a hollow fiber membrane cartridge in the process of supplying dry air for humidification into the hollow fiber membrane.

However, the membrane humidifier of the prior art described above provides packing for the end of a humidification module, but when the membrane humidifier is used for a long period of time, airtightness between the cap casing to which high-pressure dry air is supplied, the middle casing, and the hollow fiber membrane cartridge deteriorates. Accordingly, leakage of dry air occurs, and this not only lowers the supply efficiency of humidifying air but also has a negative impact on fuel cell power generation efficiency.

In order to solve the above-mentioned problems, various research and development is being conducted on assembly structure and packing design of a cartridge and a main housing for a membrane humidifier.

### Disclosure

### Technical Problem

The present disclosure is intended to propose a fuel cell membrane humidifier, in which pressure of air introduced into a main chamber of an inlet housing when dry air is supplied is applied to a variable seal through a back pressure passage, thereby increasing airtightness between a cartridge housing and the inlet housing and stably maintaining humidifying flow of dry air to membranes.

In addition, the present disclosure is intended to propose a fuel cell membrane humidifier, in which a circular flow or vortex of gas is formed without a dead zone inside a hollow fiber membrane cartridge to stably maintain humidifying flow of dry air to membranes, thereby stably maintaining fuel cell power generation efficiency.

### Technical Solution

According to one feature of the present disclosure,
there is provided a fuel cell membrane humidifier including: a main housing having an inlet connecting portion formed on a first end portion of a body, an outlet connecting portion formed on a second end portion of the body, and a gas outlet formed on one side of the body; a hollow fiber membrane cartridge comprising a seal mount formed on an end of a cartridge housing by protruding therefrom, and a fixing layer for potting each of multiple membranes in each of opposite side ends of a body thereof, with the hollow fiber membrane cartridge installed inside the main housing; an inlet housing comprising a coupling portion mounted on the inlet connecting portion of the main housing, a seal ground portion formed inside the coupling portion, and a main chamber into which dry air is supplied through a cooler; an outlet housing comprising a coupling portion mounted on the outlet connecting portion of the main housing, a gas inflow port through which gas is provided from a hydrogen fuel cell stack, a second chamber in which humid air formed through the membranes flows, and a cartridge insertion portion to which one side end of the cartridge housing is coupled; a variable seal comprising a body elastically grounded to an outer peripheral surface of the seal mount, and a rib elastically transformed with respect to the body and being in close contact with the seal ground portion; and a back pressure passage communicating between the main chamber and the seal ground portion, wherein a ground pressure of the rib on the seal ground portion is formed to increase in correspondence to a pressure of dry air of the main chamber introduced through the back pressure passage when the dry air is supplied.

According to another feature of the present disclosure according to an embodiment, there is provided the fuel cell membrane humidifier, wherein the variable seal includes a first groove formed in one side of the body, and a second groove formed to be spaced apart from the first groove to accommodate the dry air pressure.

According to still another feature of the present disclosure according to an embodiment, there is provided the fuel cell membrane humidifier, wherein the rib has a predetermined variable angle and is formed by opening outward and extending from the second groove.

According to still another feature of the present disclosure according to an embodiment, the variable seal may be formed in the cartridge insertion portion of the outlet housing.

According to still another feature of the present disclosure according to an embodiment, there is provided the fuel cell membrane humidifier, wherein the variable seal is configured as an elastic member including a rubber material.

According to still another feature of the present disclosure according to an embodiment, there is provided the fuel cell membrane humidifier, wherein the hollow fiber membrane cartridge includes: an arrangement of an upper stream distribution opening, a middle stream distribution opening, and a lower stream distribution opening formed on a first side wall of the cartridge housing; and an arrangement of an upper stream discharge opening, a middle stream discharge opening, and a lower stream discharge opening formed on a second side wall of the cartridge housing, wherein the distribution openings are formed in a multiple-layer arrangement so that an opening area increases gradually toward a lower stream side from an upper stream side, and the discharge openings are formed in a multiple-layer arrangement so that an opening area increases gradually toward an upper stream side from a lower stream side.

### Advantageous Effects

According to one embodiment disclosed in the present specification, due to the elastic force of the variable seal for the membrane humidifier and back pressure generated by air pressure formed in the main chamber of the inlet housing, ground pressure or sealing pressure increases, thereby securely maintaining airtightness and sealing performance between the inlet housing and the hollow fiber membrane cartridge and stably maintaining the flow of dry air.

In addition, according to an embodiment disclosed in the present specification, due to the arrangement structures of the distribution openings and discharge openings having different opening areas respectively at the upper stream side, middle stream side, and lower stream side of the cartridge housing, humid gas circulates inside a hollow fiber membrane module, thereby providing maximized humidification efficiency without a dead zone for dry compressed air passing through the inside of the cartridge and the hollow fiber membrane.

In addition, the effects of the present disclosure described in this way are naturally achieved by the composition of the described content regardless of whether the inventor is aware of the effects, so the above-mentioned effects are only a few effects according to the disclosed content and it should not be acknowledged that the inventor has described all effects that are known or exist.

In addition, the effects of the present disclosure should be further understood by the overall description of the specification, and even if the effects are not stated in explicit sentences, when it can be recognized that a person with ordinary knowledge in the technical field to which the disclosure pertains can obtain such effects through the present specification, the effects should be viewed as effects described in the present specification.

### Description of Drawings

FIG. 1 is a cross-sectional view of the fuel cell membrane humidifier according to an embodiment of the present disclosure disclosed in the present specification,
FIG. 2 is an enlarged view of a main part of the fuel cell membrane humidifier illustrated in FIG. 1,
FIG. 3 is a schematic perspective view of a variable seal according the embodiment of the present disclosure,
FIG. 4 is a schematic diagram illustrating the initial state of the variable seal for the fuel cell membrane humidifier according to the embodiment of the present disclosure,
FIG. 5 is a schematic diagram illustrating the operating state of the variable seal when supplying dry air to the fuel cell membrane humidifier according to the embodiment of the present disclosure, and
FIG. 6 is a schematic exploded perspective view of the fuel cell membrane humidifier according to the embodiment of the present disclosure.

### Best Mode

Hereinafter, the configuration, operation, and effects of a fuel cell membrane humidifier according to a preferred embodiment will be described with reference to the attached drawings. For reference, in the drawings below, each component is omitted or schematically shown for convenience and clarity, and the size of each component does not reflect an actual size. In addition, the same reference numerals refer to the same components throughout the specification, and reference numerals for the same components in individual drawings will be omitted.

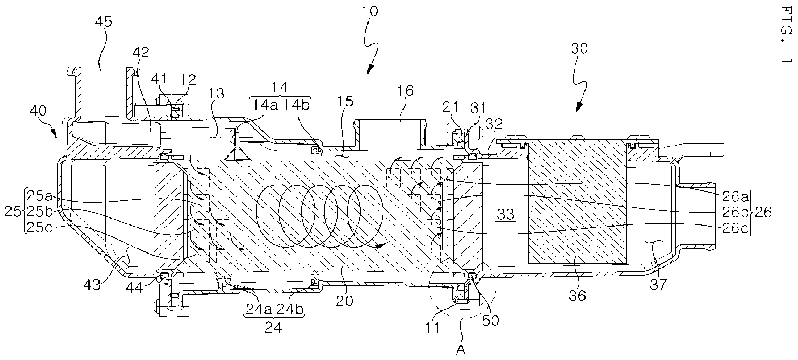

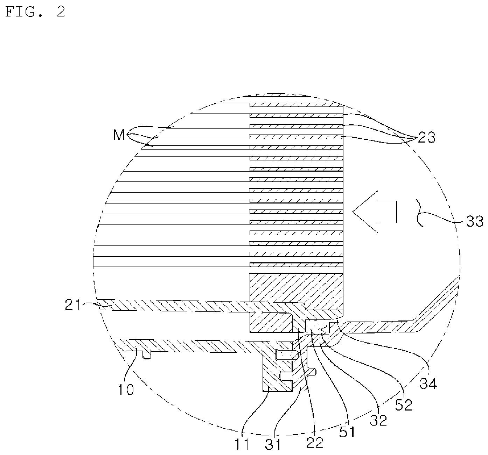

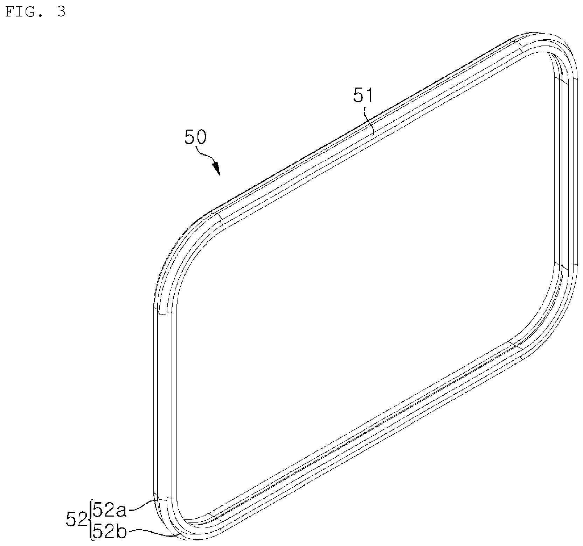

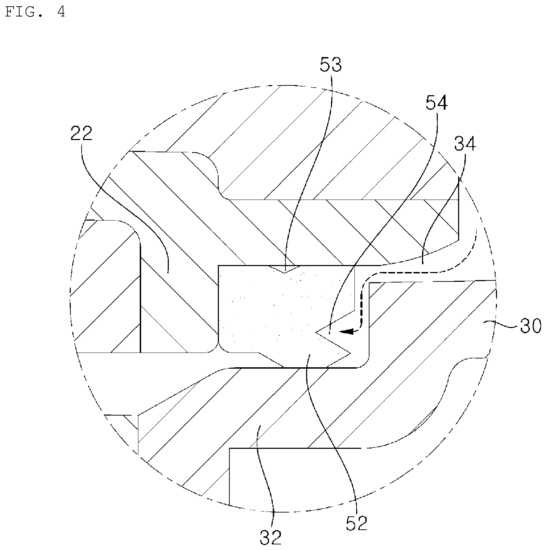

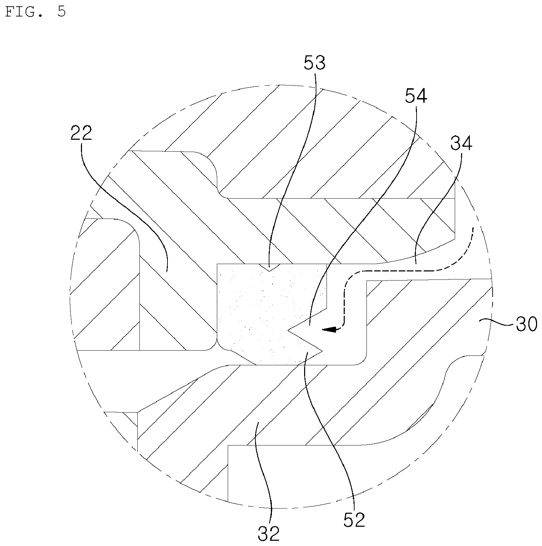

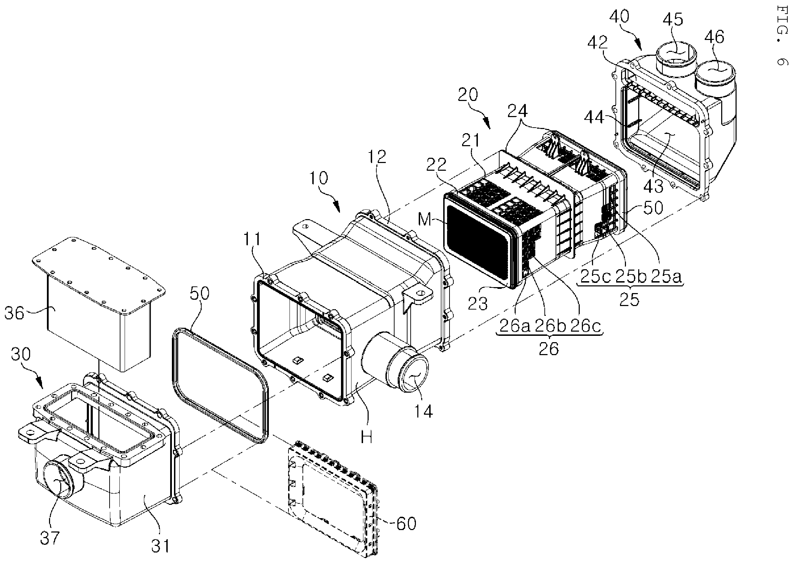

FIG. 1 is a cross-sectional view of the fuel cell membrane humidifier according to an embodiment of the present disclosure disclosed in the present specification, FIG. 2 is an enlarged view of a main part of the fuel cell membrane humidifier illustrated in FIG. 1, FIG. 3 is a schematic perspective view of a variable seal according the embodiment of the present disclosure, FIG. 4 is a schematic diagram illustrating the initial state of the variable seal for the fuel cell membrane humidifier according to the embodiment of the present disclosure, FIG. 5 is a schematic diagram illustrating the operating state of the variable seal when supplying dry air to the fuel cell membrane humidifier according to the embodiment of the present disclosure, and FIG. 6 is a schematic exploded perspective view of the fuel cell membrane humidifier according to the embodiment of the present disclosure.

Referring to FIGS. 1 and 2, the fuel cell membrane humidifier according to the embodiment of the present disclosure includes a main housing 10, a hollow fiber membrane cartridge 20 installed inside the main housing 10, and an inlet housing 30 and an outlet housing 40 mounted respectively on opposite sides of the main housing 10.

The main housing 10 includes an inlet connecting portion 11 formed on a first end portion of a body thereof, an outlet connecting portion 12 formed on a second end portion of the body, and a gas outlet 16 formed on one side of the body.

The hollow fiber membrane cartridge 20 includes a seal mount 22 formed on an end portion of a cartridge housing 21 by protruding therefrom, and a fixing layer 23 for potting each of multiple membranes M on each of opposite ends of a body thereof, with the hollow fiber membrane cartridge 20 being installed inside the main housing 10.

More specifically, the main housing 10 includes a flow in section 13 having an inlet part of gas discharged from a fuel cell, a flow out section 15 having an outlet part of the gas, and one or more cartridge support parts 14; 14a, 14b formed on the inner wall of the body between the flow in section 13 and the flow out section 15.

The hollow fiber membrane cartridge 20 includes one or more supports 24; 24a, 24b for being mounted to the cartridge support parts 14; 14a, 14b inside the main housing 10.

The inlet housing 30 includes a coupling portion 31 mounted on the inlet connecting portion 11 of the main housing 10, a seal ground portion 32 formed inside the coupling portion 31, and a main chamber 33 into which dry air is supplied through a cooler 36. The inlet housing 30 is not limited to a specific shape, and as an example, as illustrated in the drawing, an outer side of the coupling portion 31 may have an open quadrangular enclosure structure, and an air inlet 37 is formed on another side of the coupling portion 31 of the inlet housing 30.

The outlet housing 40 includes a coupling portion 41 mounted on the outlet connecting portion 12 of the main housing 10, a gas inlet part 42 through which gas is provided from a hydrogen fuel cell stack, a second chamber 43 in which humid air formed through the membranes M flows, and a cartridge insertion portion 44 to which one side end of the cartridge housing 21 is coupled. The outlet housing 40 may be provided with a gas inflow port 45 and an air outflow port 46 as in a prior art.

When assembled, the flow in section 13 of the main housing 10 defines a flow space through which high-pressure and high-humidity gas or water vapor formed in a hydrogen fuel cell is introduced through the gas inlet part 42 of the outlet housing 40, and the flow out section 15 defines a flow space through which the gas is discharged to the outside of the cartridge housing 21 after the gas circulates inside the cartridge housing 21 and sufficiently contacts the membranes M or the hollow fiber membrane without a dead zone.

The inlet housing 30 and the outlet housing 40 may be respectively fixed to the inlet connecting portion 11 and the outlet connecting portion 12 of the main housing 10 through a bolting or guide-pin assembly process during cartridge assembly and a membrane humidifier manufacturing process.

Referring to FIGS. 2 to 4, the membrane humidifier according to the present disclosure includes the variable seal 50 having a body 51 elastically grounded to the outer peripheral surface of the seal mount 21 and a rib 52 elastically transformed with respect to the body 51 and being in close contact with the seal ground portion 32, and a back pressure passage 34 communicating between the main chamber 33 and the seal ground portion 32, wherein a ground pressure of the rib 52 on the seal ground portion 32 is formed to increase in correspondence to the pressure of the dry air of the main chamber 33 introduced through the back pressure passage 34 when the dry air is supplied.

The variable seal 50 includes a first groove 53 formed on one side of the body 51 and a second groove 54 formed to be spaced apart the first groove 53 so as to accommodate the pressure of the dry air, wherein the rib 52 has a predetermined variable angle and is formed by extending outward from the second groove 54.

Preferably, the variable seal 50 is configured as an elastic member including a rubber material, and the rib 52 is formed integrally with the body 51 so that the rib can be bent to correspond to air pressure applied through the back pressure passage 34.

Referring to FIG. 5, when dry air is supplied at a preset pressure to the main chamber 33 inside the inlet housing 30, for example, when high-pressure dry air that is relatively high with respect to the internal pressure of the cartridge housing 21 is supplied to the main chamber 33, a portion of the dry air forms back pressure in the second groove 54 along the back pressure passage 34.

The back pressure is applied to the surface of the second groove 54 and acts as a force pushing the rib 52 to the seal ground portion 32 of the inlet housing 30. Accordingly, the rib 52 has a ground pressure increased by an elastic force thereof and the above-mentioned back pressure, thereby securely maintaining airtightness and sealing performance.

Referring to FIG. 6, according to another embodiment of the present disclosure, there may be further provided an adapter 60 by which the flow of air is induced between the hollow fiber membrane cartridge 20 mounted to the main housing 10 and the inlet housing 30 and is guided to the entrance of the membranes M of the hollow fiber membrane cartridge, and in this case, the variable seal 50 as described above may be configured on the end of the hollow fiber membrane cartridge 20.

Meanwhile, the hollow fiber membrane cartridge 20 according to the present disclosure includes a distribution opening arrangement 25 including an upper stream distribution opening 25a, a middle stream distribution opening 25b, and a lower stream distribution opening 25c formed on a first side wall of the cartridge housing 21, and a discharge opening arrangement 26 including an upper stream discharge opening 26a, a middle stream discharge opening 26b, and a lower stream discharge opening 26c formed on a second side wall of the cartridge housing 10.

The distribution openings 25; 25a, 25b, and 25c are formed in a multiple-layer arrangement so that an opening area increases gradually toward a lower stream side from an upper stream side. For example, as shown, the discharge openings may each have a through-hole structure in which the number of through holes increases gradually toward the lower stream distribution opening 25c from the upper stream distribution opening 25a.

The distribution opening arrangement 25 includes through holes whose opening areas increase as a distance from the flow in section 13 increases.

Although not shown, as another modified embodiment, the upper stream distribution opening 25a, the middle stream distribution opening 25b, and the lower stream distribution opening 25c may each have a through-hole structure with a different opening area, and may be have various geometric modifications including a circular hole, a triangular hole, and a rectangular hole.

Meanwhile, the discharge openings 26: 26a, 26b, 26c are formed in a multiple-layer arrangement so that an opening area increases gradually toward a lower stream side from an upper stream side. For example, as shown, the discharge openings may each have a through-hole structure in which the number of through holes increases gradually toward the lower stream discharge opening 26c from the upper stream discharge opening 26a.

The discharge opening arrangement 26: 26a, 26b, 26c is includes through holes whose opening areas decrease as a distance from the flow out section 15 increases.

Although not shown, as another modified embodiment, the upper stream discharge opening 26a, the middle stream discharge opening 26b, and the lower stream discharge opening 26c may each have a through-hole structure with a different opening area, and may be have various geometric modifications including a circular hole, a triangular hole, and a rectangular hole.

### Mode for Invention

In the humidification operation for dry air, gas generated in the hydrogen fuel cell stack (not shown) is usually provided in the form of water vapor at a preset high pressure through the gas inlet part 42 of the outlet housing 40, and is primarily filled in the flow in section 13 of the main housing 10.

Next, the gas filled in the flow in section 13 flows into the cartridge housing 21 through the upper stream distribution opening 25a, the middle stream distribution opening 25b, and the lower stream distribution opening 25c sequentially provided on one side wall of the cartridge housing 21.

In this process, after the gas circulates through the membranes M and the hollow fiber membrane module without a dead zone while forming a predetermined circulating air current and vortex (see a spiral arrow of FIG. 1) between the upper, middle, and lower regions of a hollow fiber membrane module inside the cartridge housing 20 and forms moisture, the gas enters the flow out section 15 of the main housing 10 through the discharge openings 26a, 26b, and 26c.

Meanwhile, external dry air which requires humidification is filled at a predetermined pressure in the main chamber 33 of the inlet housing 30 and is introduced into the second groove 54 of the variable seal 50 along the back pressure passage 34.

Back pressure introduced into the second groove 54 of the variable seal 50 acts as a force pushing the rib 54 outward or toward the ground portion 42 of the inlet housing 30. For example, the back pressure applied to the variable seal 50 acts as horizontal and vertical forces F in the drawing through the body 51 and the rib 52, and thus the airtightness of the variable seal is securely maintained, so the flow of dry air passing through the inlet housing 30 and the membrane module M is maintained to be stable.

As described above, dry air flowing inside the membranes or hollow fiber membranes M from the main chamber 33 of the inlet housing 30 is sufficiently humidified due to a stable flow thereof and then is provided to the hydrogen fuel cell stack through the second chamber 43 and the air outflow port 46 of the outlet housing 40 and the air outflow.

Accordingly, in the fuel cell membrane humidifier according to the present disclosure, gas supplied from the hydrogen fuel cell stack is in even contact with the entirety of the upper, middle, and lower arrangement of the membrane module M or the hollow fiber membrane module, thereby improving humidification efficiency, and the airtightness of the main chamber 33 of the inlet housing 30 is securely maintained to increase the supply efficiency of dry air, thereby greatly improving the performance of the membrane humidifier.

In the description of the present disclosure, the moisture filtration effect of a membrane area in the flow process of the above-described gas and dry air is known, so detailed description thereof is omitted.

Although the exemplary embodiments of the present disclosure have been described with reference to the attached drawings, the embodiments described in the present specification and the configurations shown in the drawings are only the most preferred embodiments of the present disclosure, but do not represent all of the technical ideas of the present disclosure, so it should be understood that there may be various equivalents and modifications that can replace them at the time of filing this application. Therefore, the embodiments described above should be understood in all respects as illustrative and not restrictive, and the scope of the present disclosure is indicated by the claims described later rather than the detailed description, and the meaning and scope of the claims and all changes or modified forms derived from the equivalent concept should be construed as falling within the scope of the present disclosure.

### Industrial Applicability

In the fuel cell membrane humidifier according to the present disclosure, airtightness between the inlet housing and the cartridge can be maintained, and when dry air is supplied, airtightness and sealing pressure increase, so the membrane humidifier is useful to stably maintain dry air supply and fuel cell power generation efficiency.

## Claims

1. A fuel cell membrane humidifier comprising:
a main housing having an inlet connecting portion formed on a first end portion of a body, an outlet connecting portion formed on a second end portion of the body, and a gas outlet formed on one side of the body;
a hollow fiber membrane cartridge comprising a seal mount formed on an end of a cartridge housing by protruding therefrom, and a fixing layer for potting each of multiple membranes in each of opposite side ends of a body thereof, with the hollow fiber membrane cartridge installed inside the main housing;
an inlet housing comprising a coupling portion mounted on the inlet connecting portion of the main housing, a seal ground portion formed inside the coupling portion, and a main chamber into which dry air is supplied through a cooler;
an outlet housing comprising a coupling portion mounted on the outlet connecting portion of the main housing, a gas inflow port through which gas is provided from a hydrogen fuel cell stack, a second chamber in which humid air formed through the membranes flows, and a cartridge insertion portion to which one side end of the cartridge housing is coupled;
a variable seal comprising a body elastically grounded to an outer peripheral surface of the seal mount, and a rib elastically transformed with respect to the body and being in close contact with the seal ground portion; and
a back pressure passage communicating between the main chamber and the seal ground portion,
wherein a ground pressure of the rib on the seal ground portion is formed to increase in correspondence to a pressure of dry air of the main chamber introduced through the back pressure passage when the dry air is supplied.

2. The fuel cell membrane humidifier of claim 1, wherein the variable seal comprises a first groove formed in one side of the body, and a second groove formed to be spaced apart from the first groove to accommodate the dry air pressure, and
the rib has a predetermined variable angle and is formed by opening outward and extending from the second groove.

3. The fuel cell membrane humidifier of claim 1, wherein the variable seal comprises a first groove formed in one side of the body, and a second groove formed to be spaced apart from the first groove to accommodate the dry air pressure, and
the rib has a predetermined variable angle and is formed by opening outward and extending from the second groove.

4. The fuel cell membrane humidifier of claim 3, wherein the variable seal is configured as an elastic member comprising a rubber material.

5. The fuel cell membrane humidifier of claim 1, wherein the hollow fiber membrane cartridge comprises:
an arrangement of an upper stream distribution opening, a middle stream distribution opening, and a lower stream distribution opening formed on a first side wall of the cartridge housing; and
an arrangement of an upper stream discharge opening, a middle stream discharge opening, and a lower stream discharge opening formed on a second side wall of the cartridge housing,
wherein the distribution openings are formed in a multiple-layer arrangement so that an opening area increases gradually toward a lower stream side from an upper stream side, and the discharge openings are formed in a multiple-layer arrangement so that an opening area increases gradually toward an upper stream side from a lower stream side.
